(19) Europäisches Patentamt
European Patent Office
Office européen des brevets

(11) Veröffentlichungsnummer: **0 501 368 B1**

# (12) EUROPÄISCHE PATENTSCHRIFT

(45) Veröffentlichungstag der Patentschrift: **29.11.95**

(51) Int. Cl.⁶: **C23F 11/14**, C23F 11/10, C10M 173/00, C10M 173/02, C10M 133/16

(21) Anmeldenummer: **92103049.0**

(22) Anmeldetag: **24.02.92**

Die Akte enthält technische Angaben, die nach dem Eingang der Anmeldung eingereicht wurden und die nicht in dieser Patentschrift enthalten sind.

## (54) Verwendung von Alkenylbernsteinsäurehalbamiden.

(30) Priorität: **26.02.91 DE 4105899**

(43) Veröffentlichungstag der Anmeldung:
**02.09.92 Patentblatt 92/36**

(45) Bekanntmachung des Hinweises auf die Patenterteilung:
**29.11.95 Patentblatt 95/48**

(84) Benannte Vertragsstaaten:
**AT BE CH DE ES FR GB IT LI NL SE**

(56) Entgegenhaltungen:
**EP-A- 0 074 199**
**EP-A- 0 127 132**
**EP-A- 0 144 738**
**EP-A- 0 216 280**
**WO-A-88/00233**

**PATENT ABSTRACTS OF JAPAN vol. 6, no. 102 (C-107)(980) 11. Juni 1982**

(73) Patentinhaber: **HOECHST AKTIENGESELLSCHAFT**

**D-65926 Frankfurt am Main (DE)**

(72) Erfinder: **Kremer, Gernot, Dr.**
**Frankfurter Strasse 200**
**W-6233 Kelkheim (Taunus) (DE)**
Erfinder: **Lorke, Horst**
**Wachenheimer Strasse 14**
**W-6237 Liederbach (DE)**

EP 0 501 368 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Anwendung von Metallbearbeitungshilfsmitteln erstreckt sich auf zahlreiche Bearbeitungsvorgänge der Vor- und Nachbehandlung von Metallen. Das Arbeitsgebiet umfaßt die spangebende und spanlose Verformung von Metallteilen. Bei spangebender Verformung der Metalle werden Bohr- und Schneideöle, bei spanloser Verformung Walz- und Ziehöle eingesetzt.

Korrosionsschutzmittel und Emulgatoren in emulgierbaren Metallbearbeitungsflüssigkeiten sollten folgende Forderungen erfüllen:

- Ausgeprägte Korrosionsschutzeigenschaften gegenüber Eisenmetallen,
- Emulgiervermögen gegenüber Mineralölen, eventuell auch in Kombination mit ausgewählten nichtionogenen Verbindungen,
- geringe Schaumneigung bzw. schneller Schaumzerfall,
- Verhinderung des Wachstums von Mikroorganismen.

Diese Forderungen werden von den in EP-A-0127132 aufgeführten Verbindungen nur teilweise erfüllt. Aus diesem Dokument sind bereits Alkenylbernsteinsäurehalbamide der Formel

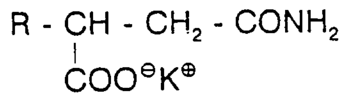

wobei R $C_6$-$C_{12}$-Alkenyl bedeutet, und deren Verwendung als Korrosionsschutzmittel bekannt. Diese Verbindungen zeigen aber kein ausreichendes Emulgiervermögen, was zu ungenügenden Standzeiten der Gebrauchsemulsionen führt. Außerdem neigen Emulsionen mit diesen Verbindungen zu Schaumbildung, was besonders bei Arbeitsprozessen wie dem Schleifen von Nachteil ist, wenn die Emulsionen hohen mechanischen Beeinflussungen ausgesetzt sind.

JP-A- 57032383 offenbart Alkanolamin-Salze von Alkenylbernsteinsäurehydroxyalkylhalbamide als Korrosionsinhibitoren für Metallbearbeitungsflüssigkeiten. EP-A- 216280 beschreibt Salze (u.a. auch Triethanolamin/Na-Mischsalze) von Alkenylbernsteinsäurealkylhalbamide als Korrosionsinhibitoren für Metallbearbeitungsflüssigkeiten.

Diese erwähnten Nachteile lassen sich durch die erfindungsgemäßen Alkenylbernsteinsäurehalbamide überwinden, die gewöhnlich durch Umsetzung von Alkenylbernsteinsäureanhydriden mit Alkanolaminen erhalten werden. Die Opaleszenz der Emulsionen, die mit diesen Alkenylbernsteinsäurehalbamiden erzielt wird, zeigt gegenüber Emulsionen mit bisher bekannten Produkten eine bessere Feinverteilung der Emulsionen und somit lange Standzeiten, d.h. eine lange Gebrauchsmöglichkeit der Emulsion, an. Auch die Forderung nach geringer Schaumneigung bzw. schnellem Schaumzerfall wird durch die erfindungsgemäßen Alkenylbernsteinsäurehalbamide besser erfüllt.

Gegenstand der Erfindung ist deshalb die Verwendung von Alkenylbernsteinsäurehalbamiden der Formeln

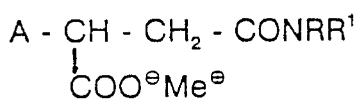

und/oder

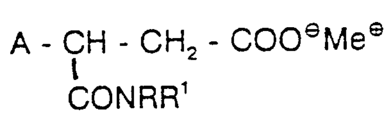

sowie gegebenenfalls Imide der Formel

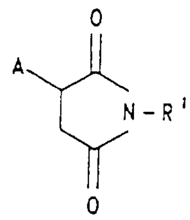

als Metallbearbeitungshilfsmittel, und/oder Korrosionsschutzmittel in wäßrigen und/oder ölhaltigen Formulierungen bzw. Metallbearbeitungsflüssigkeiten.
Die beiden Halbamide liegen im allgemeinen in Mischung vor.

Es bedeutet

- A gleich $C_6$-$C_{30}$-Alkenyl, insbesondere $C_{10}$-$C_{24}$-Alkenyl, wobei A geradkettig oder verzweigt sein kann,
- R = H oder $R^1$, wenn R = $R^1$ ist, sind die beiden Reste R und $R^1$ gleich oder verschieden.
- $R^1$ gleich $-R^2-O-(CH_2CHR^3-O-)_n-H$, mit $R^2$ = $C_1$-$C_{10}$-Alkylen, insbesondere $C_1$ $C_5$-Alkylon, wobei $R^2$ geradkettig oder verzweigt sein kann und $R^3$ = $-H$ oder $-CH_3$ mit n = 0 bis 50, vorzugsweise 0 - 10, und
- $Me^{\oplus}$ ein Triethanolamin/Natrium-Mischsalz,bedeuten.

Die genannten Imide treten als Nebenprodukte bei der Herstellung der erfindungsgemäßen Verbindungen auf und liegen gewöhnlich in einer Konzentration von 0 - 30 Gew.-% in der Mischung vor.

Gegenstand der Erfindung sind ferner wasser- und/oder ölhaltige Formulierungen und Metallbearbeitungsflüssigkeiten, welche diese Verbindungen als Korrosionsschutzmittel und Emulgator enthalten.

Die Herstellung der als Ausgangsmaterialien verwendeten Alkenylbernsteinsäureanhydride aus Olefin und Maleinsäureanhydrid ist bekannt. Bevorzugte Olefine sind Oligomere des Ethylens, Propylens und Butylens sowie Olefine mit innenständiger Doppelbindung. Die Alkenylbernsteinsäurehalbamide werden erhalten durch Umsetzung von 1 Mol eines Alkenylbernsteinsäureanhydrids mit 0,7 bis 2,5, vorzugsweise 0,8 bis 1,2 Mol Alkanolamin bei 0 bis 60 °C. Wenn der Anteil an cyclischem Imid erhöht werden soll, erweist sich eine höhere Reaktionstemperatur als zweckmäßig. Durch Neutralisation der erhaltenen Alkenylbernsteinsäurehalbamide mit Triethanolamin und Natriumhydroxyd erhält man die erfindungsgemäßen Alkenylbernsteinsäurehalbamide.

Die Alkenylbernsteinsäurehalbamide der Erfindung bilden in Wasser klare Lösungen und ergeben mit Mineralöl in Wasser leicht emulgierbare Formulierungen. Diese Verbindungen werden in konzentrierter Form als Emulgatoren und Korrosionsschutzmittel in ölhaltigen und/oder in wäßrigen Formulierungen eingesetzt. Die Konzentration der Halbamide in der Formulierung ist höher als bei der Anwendung und beträgt gewöhnlich 20 - 80 Gew.-%. Zur spangebenden oder spanlosen Verformung , wie z.B. in Bohr-, Schneid-, Zieh- und Walzflüssigkeiten, wird die Formulierung mit Wasser verdünnt.

Zur Bereitung der Formulierungen werden die erfindungsgemäßen Produkte entweder in die erforderliche Menge Wasser eingerührt oder mit Mineralöl bzw. Mineralöl/Wasser gemischt. Die erhaltenen wäßrigen bzw. ölhaltigen Formulierungen werden vom Anwender mit Wasser verdünnt bzw. emulgiert. Das Verdünnungsverhältnis beträgt im allgemeinen 1:10 bis 1:100. Die Anwendungskonzentration der Halbamide in Metallbearbeitungsflüssigkeiten, z.B. Bohr-, Schneid-, Zieh- und Walzflüssigkeiten, beträgt im allgemeinen etwa 0,1 bis 10 Gew.-%, vorzugsweise 2 - 10 Gew.-%. Die genannten Konzentrationen beziehen sich auf die Anwendung der Produkte in Wasser als auch in Mineralöl/Wasser-Emulsionen bei der Metallbearbeitung. Unter Metallbearbeitungsflüssigkeiten sind auch Kühlschmiermittel zu verstehen.

Die Alkenylbernsteinsäurehalbamide werden in wäßrigen mineralölhaltigen Metallbearbeitungsflüssigkeiten als Emulgator mit Korrosionsschutz und in wäßrigen mineralölfreien Metallbearbeitungsflüssigkeiten als Korrosionsschutzmittel eingesetzt. Sie sind zur Mischung mit allen üblichen Mineralölen, insbesondere mit naphthenbasischen, paraffinbasischen und gemischtbasischen Mineralölen geeignet.

Die Formulierungen bzw. Metallbearbeitungsflüssigkeiten können zusätzliche Hilfsstoffe zur Optimierung des Emulgierverhaltens und des Korrosionsschutzes enthalten. Dafür werden besonders vorteilhaft Oxethylate der allgemeinen Formel

$$R^7 - O - (CH_2 - CH_2 - O)_nH$$

verwendet, wobei $R^7$ = $C_{10}$-$C_{22}$-Alkyl, $C_{10}$-$C_{22}$-Alkenyl oder Alkylphenyl mit insgesamt 10 bis 20 C-Atomen und n Zahlen von 2 bis 10 bedeuten. Auch Fettsäurealkanolamide der allgemeinen Formel

$R^8$ - CO - $NR^9R^{10}$

wobei $R^8$ = $C_{10}$-$C_{22}$-Alkyl oder $C_{10}$-$C_{22}$-Alkenyl und $R^9$ und $R^{10}$ gleich oder verschieden sind und Wasserstoff, Hydroxy($C_1$-$C_6$)alkyl, insbesondere 2-Hydroxyethyl oder 2-Hydroxypropyl bedeuten, werden als Hilfsstoffe eingesetzt. Geeignete Hilfsstoffe sind auch Fettsäurepolyglykolester, insbesondere von gesättigten oder ungesättigten Fettsauren mit 10 bis 22 C-Atomen in der Alkylkette und 1 bis 10 Ethylenoxideinheiten, wie z.B. Ölsäure mit 4 bis 6 Ethylenoxid-Einheiten. Diese Hilfsstoffe sind einzeln oder in Mischung in den Formulierungen im allgemeinen in Mengen von jeweils ca. 20 bis 40 % enthalten.

Weiterhin können in den Formulierungen für diese Zwecke übliche Additive, wie z.B. Entschäumer vorhanden sein.

Die Erfindung wird durch die nachstehenden Beispiele näher erläutert.

Beispiel 1

Herstellung von Triethanolamin/Na-Salz des Tripropenylbernsteinsäurehydroxyethylhalbamids

In einem 3-Hals-Kolben mit Tropftrichter, Thermometer und Rührer werden 61 g (1,0 Mol) Monoethanolamin und 90 g E-Wasser vorgelegt. Dann tropft man innerhalb 30 Minuten 1,0 Mol Tripropenylbernsteinsäureanhydrid zu, wobei die Temperatur durch Kühlen bei max. 30 °C gehalten wird. Nach beendetem Zutropfen rührt man noch 3 Stunden bei 30 °C nach.

Zu dieser Lösung gibt man nun bei 30 °C 149 g (1,0 Mol) Triethanolamin, rührt 5 Minuten, dann 48 g (0,6 Mol) NaOH (50 %ig wäßrig) zu. Anschließend wird bei 60 °C die Losung wahrend 1 Stunde homogenisiert. Man erhält 572 g braunes, viskoses Öl. Die Zugabe des Triethanolamins kann auch bereits bei der Reaktion des Monoethanolamins mit dem Tripropenylbernsteinsäureanhydrid erfolgen.

Beispiel 2

Herstellung von Triethanolamin/Na-Salz des n-$C_{12}$/n-$C_{14}$-Akenylbernsteinsäurehydroxyethylhalbamids

Die Herstellung erfolgt analog Beispiel 1. Es werden 1,0 Mol $C_{12}$/$C_{14}$-Alkenylbernsteinsäureanhydrid zugetropft.
Man erhält 623,8 g braunes, viskoses Öl.

Beispiel 3

Herstellung von Triethanolamin/Na-Salz des Pentapropenylbernsteinsäurehydroxyethylhalbamids

Die Herstellung erfolgt analog Beispiel 1. Es werden 348 g (1,0 Mol) Pentapropenylbernsteinsäureanhydrid zu 48,8 g (0,8 Mol) Monoethanolamin zugetropft.
Man erhält 683,8 g braunes, viskoses Öl.
Der Anhydridgehalt des technischen Pentapropenylbernsteinsäureanhydrids beträgt ca. 68 %.

Beispiel 4

Herstellung von Triethanolamin/Na-Salz des Pentapropenylbernsteinsäurehydroxyisopropylhalbamids

In einem 3-Hals-Kolben mit Tropftrichter, Thermometer und Rührer werden 60 g (0,8 Mol) Monoisopropanolamin und 90 g E-Wasser vorgelegt. Dann tropft man innerhalb 30 Minuten 348 g (1,0 Mol) Pentapropenylbernsteinsäureanhydrid zu, wobei die Temperatur durch Kühlen bei max. 30 °C gehalten wird. Nach beendetem Zutropfen rührt man noch 3 Stunden bei 30 °C nach.

Zu dieser Lösung gibt man nun bei 30 °C 149 g (1,0 Mol) Triethanolamin, rührt 5 Minuten, dann 48 g (0,6 Mol) NaOH (50 %ig wäßrig) zu. Anschließend wird bei 60 °C die Lösung während 1 Stunde homogenisiert.
Man erhält 695 g braunes, viskoses Öl.

Beispiel 5

Herstellung von Triethanolamin/Na-Salz des Pentapropenylbernsteinsäurediglykolhalbamids

In einem 3-Hals-Kolben mit Tropftrichter, Thermometer und Rührer werden 84 g (0,8 Mol) Diglykolamin und 90 g E-Wasser vorgelegt. Dann tropft man innerhalb von 30 Minuten 348 g (1,0 Mol) Pentapropenylbernsteinsäureanhydrid zu, wobei die Temperatur durch Kühlen bei max. 30 °C geharten wird. Nach beendetem Zutropfen rührt man noch 3 Stunden bei 30 °C nach.

Zu dieser Lösung gibt man nun bei 30 °C 149 g (1,0 Mol) Triethanolamin, rührt 5 Minuten, dann 48 g (0,6 Mol) NaOH (50 %ig wäßrig) zu. Anschließend wird bei 60 °C die Lösung während 1 Stunde homogenisiert.
Man erhält 719 g braunes, viskoses Öl.

Beispiel 6

Herstellung von Triethanolamin/Na-Salz des n-$C_{10}$/n-$C_{14}$-Akenylbernsteinsäurehydroxyethylhalbamids

Die Herstellung erfolgt analog Beispiel 1. Es werden 263 g (1,0 Mol) $C_{10}$/$C_{14}$-Alkenylbernsteinsäureanhydrid zugetropft.
Man erhält 611 g braunes, viskoses Öl.

Beispiel 7

Herstellung von Triethanolamin/Na-Salz des Pentapropenylbernsteinsäurebis(hydroxyethyl)halbamids

In einem 3-Hals-Kolben mit Tropftrichter, Thermometer und Rührer werden 0,8 Mol Diethanolamin und 90 g E.-Wasser vorgelegt. Dann tropft man innerhalb 30 Minuten 348 g (1,0 Mol) Pentapropenylbernsteinsäureanhydrid zu, wobei die Temperatur durch Kühlen bei max. 30 °C gehalten wird. Nach beendetem Zutropfen rührt man noch 3 Stunden bei 30 °C nach.

Zu dieser Lösung gibt man bei 30 °C 1,0 Mol Triethanolamin, rührt 5 Minuten, dann 0,6 Mol NaOH (50 %ig wäßrig) zu. Anschließend wird bei 60 °C die Lösung während 1 Stunde homogenisiert.
Man erhält 719 g braunes, viskoses Öl.

Bespiel 8

Emulgatormischung

370 g der Substanz aus Beispiel 1,
310 g Tallölfettsäurediethanolamid sowie
320 g Oleylalkoholpolyglykolether (2 Mol Ethylenoxid)
werden bei Raumtemperatur gemischt und gerührt, bis eine klare Lösung entstanden ist.

Beispiele 9 bis 14

Emulgatormischungen

Je 370 g der Substanz aus den Beispielen 2 bis 7 werden analog Beispiel 8 mit den dort angegebenen beiden Verbindungen gemischt.

Die vorteilhaften Eigenschaften der in den Beispielen hergestellten Verbindungen bzw. Mischungen ergeben sich aus den in den nachfolgenden Tabellen aufgeführten Meßwerten.

| Beispiel | 1 | 2 | 3 | 4 | 5 | 6 | 7 |
|---|---|---|---|---|---|---|---|
| Aussehen/20°C | schwarz-braune, klare Flüssigkeit | | | | | | |
| pH-Wert<br>1 % in dest. Wasser | 8,3 | 8,4 | 8,7 | 9,0 | 9,0 | 8,5 | 9,1 |
| <u>Löslichkeit</u><br>3 %ige Lösung in $H_2O$<br>0° dH sofort<br>0° dH n. 24 Std. | transp.<br>transp. | transp.<br>transp. | klar<br>klar | trüb<br>trüb | trüb<br>trüb | klar<br>klar | trüb<br>trüb |
| 20° dH sofort (Natur)<br>20° dH n. 24 Std.(Natur) | trüb<br>trüb | transp.<br>trüb | transp.<br>transp. | trüb<br>trüb | trüb<br>trüb | klar<br>klar | trüb<br>trüb |
| 20° dH sofort Synthese-Wasser/ DIN 51360/I | trüb | trüb | transp. | trüb | trüb | klar | trüb |
| 20° dH nach 24 Std. Synthese-Wasser/ DIN 51360/I | trüb | trüb | transp. | trüb | trüb | klar | trüb |

| Beispiel | 1 | 2 | 3 | 4 | 5 | 6 | 7 |
|---|---|---|---|---|---|---|---|
| Schaumverhalten<br>3 %ige Lösung in $H_2O$.<br>*50 ml werden in einem 250 ml verschlossenen Meßzylinder 1 Min. kräftig geschüttelt | | | | | | | |
| dest. $H_2O$ sofort<br>nach 5 Minuten | starker Schaum<br>Schaum | starker Schaum<br>Schaum | Schaum<br>zerfallen | starker Schaum<br>Schaum | starker Schaum<br>Schaum | starker Schaum<br>Schaum | starker Schaum<br>Schaum |
| 20° dH (Natur) sofort<br>nach 5 Minuten | Schaum<br>Schaum | Schaum<br>Schaum | wenig Schaum<br>zerfallen | Schaum<br>Schaum | Schaum<br>Schaum | Schaum<br>Schaum | Schaum<br>Schaum |
| 20° dH Synthese-Wasser<br>sofort nach 5 Minuten | Schaum<br>Schaum | Schaum<br>Schaum | wenig Schaum<br>zerfallen | Schaum<br>Schaum | Schaum<br>Schaum | Schaum<br>Schaum | Schaum<br>Schaum |
| Korrosionsschutz<br>DIN 51360/I<br>dest. $H_2O$ 1 %<br>20° dH Natur 2,5 %<br>20° dH Synthese-Wasser 3 % | <br><br>kein Rost<br>Spur Rost<br>Spur Rost | <br><br>Spur Rost<br>Spur Rost<br>Spur Rost | <br><br>kein Rost<br>kein Rost<br>kein Rost | <br><br>kein Rost<br>kein Rost<br>wenig Rost | <br><br>kein Rost<br>wenig Rost<br>Rost | <br><br>kein Rost<br>kein Rost<br>Spur Rost | <br><br>kein Rost<br>wenig Rost<br>wenig Rost |
| DIN 51360/2<br>dest. $H_2O$ 1,5 %<br>20° dH Natur 2,5 %<br>20° dH Synthese 3,0 % | <br>kein Rost<br>kein Rost<br>Spur Rost | <br>kein Rost<br>kein Rost<br>Spur Rost | <br>kein Rost<br>kein Rost<br>kein Rost | <br>Rost<br>Spur Rost<br>kein Rost | <br>Rost<br>Rost<br>Spur Rost | <br>kein Rost<br>kein Rost<br>kein Rost | <br>Rost<br>wenig Rost<br>kein Rost |

| Beispiel | 8 | 9 | 10 | 11 | 12 | 13 | 14 |
|---|---|---|---|---|---|---|---|
| 5 %ige Emulsion aus<br>80 % Mineralöl<br>20 % Emulgator | | | | | | | |
| a) Emulgierverhalten<br>dest. $H_2O$ sofort<br>nach 24 Std.<br>20° dH Natur sofort<br>nach 24 Stunden<br>20° dH Synthese-<br>Wasser sofort<br>nach 24 Std. | milchig<br>Rahm<br>milchig<br>Rahm<br><br>milchig<br>Rahm | milchig<br>Rahm<br>milchig<br>starker Rahm<br><br>milchig<br>Rahm/Öl | milchig-opal<br>unverändert<br>milchig-opal<br>unverändert<br><br>milchig-opal<br>unverändert | milchig-opal<br>unverändert<br>milchig-opal<br>unverändert<br><br>milchig-opal<br>unverändert | milchig-opal<br>unverändert<br>milchig-opal<br>unverändert<br><br>milchig-opal<br>unverändert | milchig-opal<br>unverändert<br>milchig-opal<br>unverändert<br><br>milchig-opal<br>unverändert | milchig-opal<br>unverändert<br>milchig-opal<br>unverändert<br><br>milchig-opal<br>unverändert |
| b) Korrosionsschutz<br>DIN 51360/1:2 %ige<br>Emulsion<br>dest. $H_2O$<br>Synth. $H_2O$ 20° dH | kein Rost<br>Rost | kein Rost<br>Rost | kein Rost<br>kein Rost | kein Rost<br>wenig Rost | kein Rost<br>wenig Rost | kein Rost<br>wenig Rost | kein Rost<br>wenig Rost |
| c) Schaumverhalten<br>20° dH Natur sofort<br>nach 5 Minuten | Schaum<br>Schaum | Schaum<br>Schaum | Spur Schaum<br>kein Schaum | Schaum<br>Schaum | Schaum<br>Schaum | Schaum<br>Schaum | Schaum<br>Schaum |
| pH-Wert<br>1 % in dest. Wasser | 8,8 | 9,0 | 9,1 | 9,0 | 9,0 | 8,8 | 9,1 |

## Patentansprüche

**1.** Verwendung von Alkenylbernsteinsäurehalbamiden der Formeln

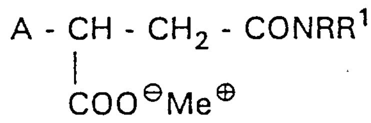

und/oder

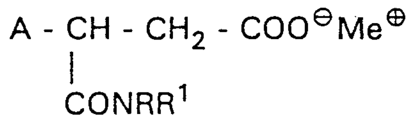

sowie gegebenenfalls Imide der Formel

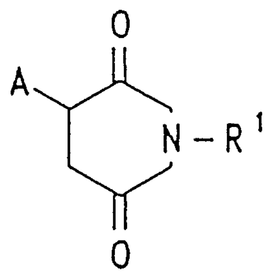

als Metallbearbeitungshilfsmittel und/oder Korrosionsschutzmittel in wäßrigen und/oder ölhaltigen Formulierungen bzw. Metallbearbeitungsflüssigkeiten,
worin

| | |
|---|---|
| A | $C_6$-$C_{30}$-Alkenyl und geradkettig oder verzweigt ist, |
| R | = H oder $R^1$, |
| $R^1$ | = $-R^2$-O-$(CH_2CHR^3$-$O)_n$-H ist, mit $R^2$ = $C_1$-$C_{10}$-Alkylen, wobei $R^2$ geradkettig oder verzweigt ist, $R^3$ = -H oder $-CH_3$ und n = 0 bis 50 und |
| $Me^{\oplus}$ | ein Triethanolamin/Natrium-Mischsalz, bedeuten. |

**2.** Verwendung der Alkenylbernsteinsäurehalbamide nach Anspruch 1 als Korrosionsschutzmittel und Emulgator.

**3.** Verwendung von Alkenylbernsteinsäurehalbamiden nach Anspruch 1, worin A $C_{10}$-$C_{24}$-Alkenyl, $R^2$ $C_1$-$C_5$-Alkylen und n = 0 bis 10 bedeuten.

**4.** Verwendung der Alkenylbernsteinsäurehalbamide nach Anspruch 1 als Korrosionsschutzmittel in wasser- und/oder ölhaltigen Formulierungen zusammen mit Oxethylaten der allgemeinen Formel

$R^7$ - O - $(CH_2$ - $CH_2$ $O)_nH$

wobei $R^7$ = $C_{10}$-$C_{22}$-Alkyl, $C_{10}$-$C_{22}$-Alkenyl oder Alkylphenyl mit insgesamt 10 bis 20 C-Atomen und n Zahlen von 2 bis 10 bedeuten und/oder Fettsäurealkanolamiden der allgemeinen Formel

$R^8$ - CO - $NR^9R^{10}$

wobei $R^8$ = $C_{10}$-$C_{22}$-Alkyl oder $C_{10}$-$C_{22}$-Alkenyl und $R^9$ und $R^{10}$ gleich oder verschieden sind und

Wasserstoff oder Hydroxy($C_1$-$C_6$)alkyl bedeuten und/oder Fettsäurepolyglykolester.

**5.** Verwendung der Alkenylbernsteinsäurehalbamide nach Anspruch 4, worin $R^9$ und $R^{10}$ gleich oder verschieden sind und 2-Hydroxyethyl oder 2-Hydroxyproyl bedeuten.

**6.** Wasser- und/oder ölhaltige Formulierungen zur Bearbeitung von Metallen, enthaltend Alkenylbernsteinsäurehalbamide nach Anspruch 1.

**7.** Wasser- und/oder ölhaltige Kühlschmiermittel, enthaltend Alkenylbernsteinsäurehalbamide nach Anspruch 1.

**Claims**

**1.** Use of alkenylsuccinic acid half-amides of the formulae

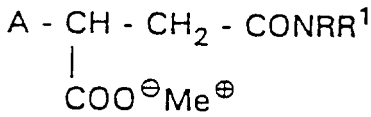

and/or

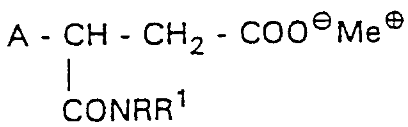

and, if appropriate, imides of the formula

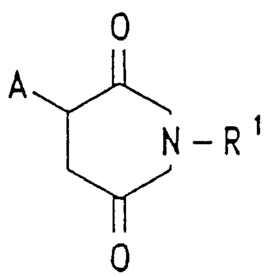

as metalworking aids and/or anticorrosive agents in aqueous and/or oil-containing formulations or metalworking liquids,
in which formulae:
A is $C_6$-$C_{30}$ alkenyl and is linear or branched,
R = H or $R^1$,
$R^1$ = $-R^2-O-(CH_2CHR^3-O)_n-H$, where $R^2$ = $C_1$-$C_{10}$ alkylene, $R^2$ being linear or branched, $R^3$ = -H or $-CH_3$ and n = 0 to 50, and
$Me^{\oplus}$ is a triethanolamine/sodium mixed salt.

**2.** Use of the alkenylsuccinic acid half-amides as claimed in claim 1 as anticorrosive agent and emulsifier.

**3.** Use of alkenylsuccinic acid half-amides as claimed in claim 1, in which A is $C_{10}$-$C_{24}$ alkenyl, $R^2$ is $C_1$-$C_5$ alkylene and n = 0 to 10.

**4.** Use of the alkenylsuccinic acid half-amides as claimed in claim 1 as anticorrosive agents in water- and/or oil-containing formulations, together with ethoxylates of the formula

$R^7$-O-($CH_2$-$CH_2$O)$_n$H

$R^7$ being $C_{10}$-$C_{22}$ alkyl, $C_{10}$-$C_{22}$ alkenyl or alkylphenyl having a total of 10 to 20 carbon atoms and n being a number from 2 to 10, and/or fatty acid alkanolamides of the formula

$R^8$-CO-N$R^9$$R^{10}$

$R^8$ being $C_{10}$-$C_{22}$ alkyl or $C_{10}$-$C_{22}$ alkenyl and $R^9$ and $R^{10}$, which are identical or different, being hydrogen or hydroxy($C_1$-$C_6$)alkyl and/or fatty acid polyglycol esters.

**5.** Use of the alkylsuccinic acid half-amides as claimed in claim 4, in which $R^9$ and $R^{10}$, which are identical or different, are 2-hydroxyethyl or 2-hydroxypropyl.

**6.** A water- and/or oil-containing formulation for metalworking, containing an alkenylsuccinic acid half-amide as claimed in claim 1.

**7.** A water- and/or oil-containing cooling lubricant, containing an alkenylsuccinic acid half-amide as claimed in claim 1.

## Revendications

**1.** Utilisation des hémi-amides des acides alcénylsucciniques de formules :

$$A - CH - CH_2 - CONRR^1$$

$$COO^-Me^+$$

et/ou

$$A - CH - CH_2 - COO^-Me^{\oplus}$$

$$|$$

$$CONRR^1$$

ainsi qu'éventuellement des imides de formule

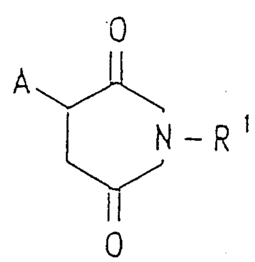

comme adjuvants d'usinage de métaux, et/ou comme agents protecteurs contre la corrosion dans des formulations aqueuses et/ou huileuses, respectivement dans des liquides d'usinage de métaux,
où

A représente alcényle en $C_6$-$C_{30}$, étant linéaire ou ramifié,

R représente H ou $R^1$

$R^1$ représente $-R^2-O-(CH_2CHR^3-O-)n-H$ avec $R^2$ égal à alkylène en $C_1$-$C_{10}$, $R^2$ pouvant être linéaire ou ramifié et $R^3$ est égal à -H ou $-CH_3$ avec n qui va de 0 à 50, et

$Me^{\oplus}$ est un sel mixte de la triéthanolamine/sodium.

**2.** Utilisation des hémi-amides des acides alcénylsucciniques selon la revendication 1, comme agents de protection contre la corrosion et émulsifiants.

**3.** Utilisation des hémi-amides des acides alcénylsucciniques selon la revendication 1, où A représente alcényle en $C_{10}$-$C_{24}$, $R^2$ représente alkylène en $C_1$-$C_5$ et n va de 0 à 10.

**4.** Utilisation des hémi-amides des acides alcénylsucciniques selon la revendication 1, comme agents de protection contre la corrosion dans des formulations aqueuses et/ou huileuses conjointement avec des éthoxylates de formule générale :

$R^7-O-(CH_2-CH_2-O)_nH$

où $R^7$ représente alkyle en $C_{10}$-$C_{22}$, alcényle en $C_{10}$-$C_{22}$ ou alkylphényle avec au total de 10 à 20 atomes de carbone et n va de 2 à 10 et/ou des alcanolamines d'acides gras de formule générale :

$R^8-CO-NR^9R^{10}$

où $R^8$ représente alkyle en $C_{10}$-$C_{22}$ ou alcényle en $C_{10}$-$C_{22}$ et $R^9$ et $R^{10}$ sont identiques ou différents et représentent l'hydrogène, hydroxyalkyle en $C_1$-$C_6$ et/ou des esters de polyglycols d'acides gras.

**5.** Utilisation des hémi-amides des acides alcénylsucciniques selon la revendication 4, où $R^9$ et $R^{10}$ sont identiques ou différents et représentent le 2-hydroxyéthyle ou le 2-hydroxypropyle.

**6.** Formulations aqueuses et/ou huileuses d'usinage de métaux contenant des hémi-amides des acides alcénylsucciniques selon la revendication 1.

**7.** Lubrifiant réfrigérant aqueux et/ou huileux contenant des hémi-amides des acides alcénylsucciniques selon la revendication 1.